# EUROPÄISCHE PATENTSCHRIFT

(11) **EP 0 998 185 B1**
(45) Veröffentlichungstag und Bekanntmachung des Hinweises auf die Patenterteilung: **02.03.2005**
(21) Anmeldenummer: 98936211.6
(22) Anmeldetag: 18.06.1998
(51) Int. Cl.: A01C 5/06, A01C 7/00

(54) **VORRICHTUNG ZUM KOMBINIERTEN VORBEREITEN DES BODENS FÜR DAS SÄEN UND ZUM AUSBRINGEN VON SAATGUT**
DEVICE FOR COMBINED SOIL PREPARATION FOR SOWING AND PLACING SEEDS
DISPOSITIF PERMETTANT DE COMBINER LA PREPARATION DU SOL POUR LES SEMAILLES ET L'EPANDAGE DE LA SEMENCE

(30) Priorität: 18.06.1997 DE 29710497 U; 16.12.1997 DE 29722141 U; 23.04.1998 DE 29807329 U
(43) Veröffentlichungstag der Anmeldung: 10.05.2000
(73) Patentinhaber: Hendlmeier, Konrad, D-93107 Untersanding (DE)
(72) Erfinder: Hendlmeier, Konrad, D-93107 Untersanding (DE)
(74) Vertreter: Wasmeier, Alfons, Dipl.-Ing.
(86) Internationale Anmeldenummer: PCT/DE1998/001668
(87) Internationale Veröffentlichungsnummer: WO 1998/057530

(56) Entgegenhaltungen:
- EP-A- 0 402 290
- EP-A- 0 730 818
- DE-A- 3 743 032
- DE-A- 4 007 783
- DE-U- 29 714 274
- FR-A- 2 313 857
- FR-A- 2 656 195
- GB-A- 2 161 053
- GB-A- 2 176 083

## Beschreibung

Die Neuerung betrifft eine Vorrichtung zum Vorbereiten des Bodens für das Säen und zum Ausbringen von Saatgut, mit rotierenden Räumwerkzeugen in Walzen-, Sternwalzen- oder Reifenform mit davon getrennt angeordneten Sävorrichtungen mit Saatgutausläufen sowie mit einer vorausarbeitenden Vorrichtung für die Bodenbearbeitung, insbesondere für das Ziehen der Saatrillen.

Aus DE 42 38 022.7 - A1 ist ein Bodenverfestigungsgerät der gattungsgemäßen Art bekannt, das an einem Maschinenrahmen Bodenbearbeitungselemente, z.B. Schare, Scheiben, Grubber oder dergl. an Scharstielen, und ein Stempelgerät mit Stempelwerkzeugen, z.B. auf zwei hintereinander angeordneten horizontalen Achsen, aufweist. Mit einer derartigen Anordnung wird erreicht, daß auf dem vorzubereitenden Boden ein störungsfreies Arbeiten zur Verfestigung des Bodens auch bei ungünstigen Boden- und Witterungsverhältnissen sichergestellt ist und ein Zusetzen der Wirkflächen einer solchen Anordnung wirksam verhindert wird. Gleichzeitig werden mit einer solchen Anordnung pflanzliche Rückstände daran gehindert, in die Saatgutrillen zu gelangen, das Auflaufen des Saatgutes zu behindern, und sicherzustellen, daß zwischen den Scharstielen vorhandene organische Masse nicht zu einem Verstopfen der Scharstiele führt, indem die Stempelelemente eine Zwangsbefreiung der Saatgutausbringvorrichtung bzw. der Säschare ergeben und als Zwangsniederhalter wirken.

In der DE 297 14 274.7 - U1 des Anmelders ist eine Bodenverfestigungsvorrichtung beschrieben und dargestellt, die z.B. als Federarme ausgebildete Verdichtungselemente aufweist, die über Befestigungsflansche mit dem die Achse festlegenden Rohr befestigt sind. Der innere Abschnitt eines jeden Befestigungselementes verläuft von dem jeweiligen Befestigungsflansch radial nach außen und geht dort in einen teilkreisförmigen äußeren Abschnitt über. Die äußeren Abschnitte bilden dabei die Wirkfläche des Stempelwerkzeuges und stellen in ihrer Gesamtheit den Umfangskreis dar, der lediglich an den Stellen unterbrochen ist, die als Spalte zwischen zwei benachbarten äußeren Abschnitten, also an den freien Enden der äußeren Abschnitte, ausgebildet sind. Beim Überfahren eines auf dem Boden liegenden Hinternisses, z.B. eines Steines, wird der jeweilige äußere Abschnitt, der auf dieses Hindernis auftrifft, nach innen ausgelenkt; dabei trifft das freie Ende des ausgelenkten Abschnittes auf das vorausgehende Verdichtungselement, in der Regel den radialen inneren Abschnitt, oder auch auf die radial äußere Begrenzung des radialen Flansches auf. Dieses Auftreffen verhindert, daß die Feder übermäßig stark ausgelenkt und beschädigt wird.

Gegenstand der DE 512 078 ist eine Zinkenwalze mit zwischen den Zinkensternen liegenden Abstreifern, die am Rahmen freu schwingbar angeordnet sind. Eine derartige Zinkenwalze gibt dem Fachmann jedoch keine Anregungen, Nivellierelemente einzusetzen und die Zinkenwalze zum Vorbereiten des Bodens für das Ausbringen von Saatgut einzusetzen.

Aus der FR-A- 2 656 195 ist eine Maschine zum Vorbereiten des Bodens für das Ausbringen von Saatgut bekannt, bei der Rechenzinken, die in Fahrtrichtung auf Lücke mit den Räumwerkzeugen und zwischen diese eingreifend vorgesehen sind. Der Fachmann kann aus derartigen vorbekannten Maschinen ebenfalls Nivellierelemente der der Erfindung zugrundeliegenden Art nicht als vorbekannt oder naheliegend entnehmen.

Aus DE 297 22 141 - U1 ist eine Vorrichtung bekannt, mit der ein optimales Saatbeet dadurch erzielt wird, daß der Unterboden verfestigt und ausreichend Feinerde zum Bedecken des Saatgutes erzielt wird. Die einzelnen Stempelvorrichtungen sind hierbei nebeneinander oder ineinandergreifend angeordnet, so daß eine Vielzahl von Stempelvorrichtungen über die gesamte Längsachse der Maschine erforderlich ist. Derartige Stempelvorrichtungen sind relativ aufwendige und teuere Teile.

Aufgabe der Erfindung ist es, eine gattungsgemäße Vorrichtung so weiterzuentwickeln daß die Saatgutausbringung verbessert und das Entfernen der organischen Rückstände sowie das Freihalten der Räume zwischen benachbarten Wirkflächen unterstützt wird. Desweiteren ist Aufgabe der Erfindung, die Verdichtungselemente in Form von einseitig auslenkbaren Stempelelementen gegen übermäßige Beanspruchung und Auslenkung, und demzufolge Beschädigung zu schützen. Aufgabe der Erfindung ist ferner, die Anzahl der erforderlichen Stempelelemente zu verringern, um Aufwand und Kosten hierfür zu reduzieren.

Gemäß der Erfindung wird eine Vorrichtung mit den Merkmalen des Anspruchs 1 vorgeschlagen.

Weitere Ausgestaltungen der Erfindung sind Gegenstand der Unteransprüche.

Die Nivelliervorrichtung in Form einer zwischen zwei Stempelelementen angeordneten Nivellierschiene oder eines Nivellierstreifens wirkt auf das am Rand einer jeden Stempelvorrichtung angestaute Erdreich ein und verfestigt es in entsprechender Weise wie die Stempelelemente, so daß die beiden abwechselnden, unterschiedlichen Elemente sich gegenseitig unterstützen. Wenn bei feuchten Böden Erde an den Umfangsflächen der Stempelelemente anklebt, bricht nach einer gewissen, aufgebauten Höhe das anhaftende Erdreich von selbst ab, und wird zwangsläufig abgeworfen. Das abgeworfene Erdreich wird von den Wirkflächen der Nivellierelemente überfahren und eingeebnet, so daß ein einwandfreies Saatbeet geschaffen wird. Das Nivellierelement selbst ist ein elastisch nachgiebiges oder elastisch nachgiebig befestigtes Bauteil, das an einem Teil des Rahmens befestigt ist, und dessen Form der eines Stempelelementes entsprechen kann, also teilkreisförmig ausgeführt, oder aber einen weitgehend geradlinigen oder geknickten Verlauf haben und am vorderen Ende vom Boden weg gekrümmt sein kann. Im Einsatz streicht der untere Teil eines derartigen Nivellierelementes über den Boden hinweg, und ebnet bzw. glättet das teilweise angehäufte Erdreich vor dem Werkzeug. Das Nivellierelement hat beispielsweise die Form eines Flachstabes oder Streifens, kann aber auch über seine Längserstreckung gekrümmt, z.B. teilrohrförmig, dreieckförmig oder dergl. ausgebildet sein und besteht aus Metall bzw. Eisen, oder aus Kunststoff, Gummi oder anderem abriebfestem Material.

Der Bodenkontakt des untersten Bereiches des Nivellierelementes liegt vorzugsweise an seiner vordersten, tiefsten Stelle, und die Vorderkante im Wirkbereich bzw. im Staubereich bzw. der Stauzone der Stempelvorrichtung. Der Wirkbereich bzw. der Staubereich des jeweiligen Stempelelementes einer Stempelvorrichtung ist gegenüber dem Wirkbereich bzw. der Stauzone des Nivellierelementes voreilend angeordnet, so daß das Nivellierelement auf das Erdreich so einwirkt, daß das von den unmittelbar benachbarten (links und rechts davon laufenden) Stempelelementen abfallende Erdreich geebnet wird. Bei einer speziellen Ausführungsform der Erfindung ist das Nivellierelement etwa in Form des Teilkreiselementes eines Stempelelementes, also ähnlich wie dieses gewölbt ausgebildet.

Die Nivellierelemente haben etwa die gleiche Breite wie die Stempelelemente, so daß jeweils ein Stempelelement durch ein Nivellierelement ersetzt ist, derart, daß in Achsrichtung jeweils eine Stempelvorrichtung und ein Nivellierelement aufeinanderfolgend angeordnet sind.

In weiterer Ausgestaltung der Erfindung wird vorgeschlagen, daß den einzelnen Nivellieelementen jeweils ein oder mehrere Auslaufvorrichtungen, z.B. für Saatkörner und/oder Dünger, zugeordnet sind, wobei die Auslaufvorrichtungen in Form von Rohren, Schläuchen oder dergl. an den Nivellierelementen abgestützt bzw. aufgenommen werden, die Auslaufstellen jedoch nachlaufend und tieferliegend als die tiefste Stelle des Nivellierelementes angeordnet sind. Dabei ist der Abstand zwischen der tiefsten Stelle des Nivellierelementes und der Auslaufstelle der Auslaufvorrichtung variabel, damit die Ablagetiefe eingestellt werden kann.

An Stelle der Stempelwerkzeuge können auch walzenförmige,radförmige, reifenförmige Werkzeuge oder dergl. in Verbindung mit den Nivellierelementen eingesetzt werden.

Mit der Vorrichtung nach einer weiteren Ausgestaltung des Erfindung wird erreicht, daß die vorausarbeitenden Bodenbearbeitungselemente den Boden für die Saatgutrillen aufreißen (diese Bodenbearbeitung kann wahlweise mit der vorgeschlagenen Vorrichtung in einem einzigen Arbeitsgang oder in einem separaten Arbeitsgang mit getrenntem Gerät auch zeitlich früher durchgeführt werden), so daß ein entsprechendes Öffnen und Lockern des Bodens für die Ausbildung der Särillen vorgenommen wird, ehe die Vorrichtung in Form des Rechens (bzw. Kammes) mit Saatgutausläufen in Reihe mit den Bodenbearbeitungselementen die Saatgutrillen zieht oder ein vorbereitetes und verdichtetes Saatbeet mit Hilfe der Rechenzinken bereitet, auf das das Saatgut über die mit den Rechenzinken (bzw. Kammzinkens) verbundenen Saatgutausläufe abgelegt wird. Die Rechenzinken haben dabei gleichzeitig den Zweck, gröberes organisches, auf dem Boden liegendes Material zur Seite zu drücken, damit die Saatrillen möglichst frei von derartigem organischem Material gehalten werden.

Die anschließende Räumvorrichtung, insbesondere eine Stempelwalze (wahlweise auch eine Prismenwalze, eine aus einzelnen Reifen gebildete Walze, eine Sternwalze oder dergl., bzw. zwei derartige, in Fahrtrichtung hintereinander und auf Lücke angeordnete Walzen), ist in bezug auf die Rechenzinken so angeordnet, daß die Rechenzinken und die Räumelemente in Fahrtrichtung versetzt zueinander bzw. auf Lücke laufend in die Räumelemente zwischen die Rechenzinken eingreifen und damit sich zwischen den Rechenzinken ansammelndes Material beseitigen können. Die Räumelemente haben dabei den Zweck, loses Material von den Saatgutausläufen fernzuhalten.

Die Rechenzinken der nachgiebig ausgebildeten Rechenanordnung, die entweder selbst als Nivellierschiene wirken kann oder der eine Nivellierschiene zugeordnet ist, greifen somit gezogen in die durch die Bodenbearbeitung aufgerissene Erde ein und bilden die Saatgutrille mit dem Saatgutbett aus. Gleichzeitig gewährleisten sie ein sicheres und sauberes Ablegen des Saatgutes auf das durch die Rechenzinken gerade bereitete Saatbett, wobei das Ausbilden des Saatbettes und das Ablegen des Saatgutes zeitlich und räumlich aufeinanderfolgen bzw. im Falle einer speziellen Ausführungsform unmittelbar aneinander anschließen. Die anschließende Räumvorrichtung befreit den Boden um die Saatgutablage herum von losem, organischem Material und übt gleichzeitig einen Druck auf das zwischen zwei benachbarten Rechenzinken angehäufte Erdreich aus, da die Räumelemente zwischen die Rechenzinken eingreifen und dabei gleichzeitig bewirken, daß evtl. Verstopfungen, Verlegungen durch organisches Material usw. aufgrund der Abstreiferwirkung an der Entstehung wirksam gehindert werden. Wenn eine zweite Räumvorrichtung, z.B. in Form einer zweiten Stempelwalze, nachgeschaltet ist, sind diese Räumelemente in Reihe mit den Rechenzinken ausgebildet und so zu den Räumelementen der ersten Räumvorrichtung angeordnet, daß die Räumelemente der beiden Räumvorrichtungen auf Lücke angeordnet sind und versetzt zueinander jeweils ein Element der einen Vorrichtung zwischen zwei benachbarte Elemente der anderen Vorrichtung eingreift.

Der mit dem zentralen Rohr der Vorrichtung befestigte Träger bzw. Flansch verläuft vom Rohr ausgehend radial nach außen, und seine Stirnfläche bildet den Festanschlag für den äußeren Abschnitt des nachlaufenden Verfestigungselementes, wobei das äußere freie Ende dieses Elementes in Anlage mit der Stirnfläche des Trägers kommt. Die Stirnfläche kann rechtwinklig zur Längsachse des Trägers ausgebildet sein, so daß die Innenseite des Endes des äußeren Abschnittes plan auf der Stirnfläche aufliegt oder abhängig von der Art der Auslenkung an der Rückseite des inneren Abschnittes bzw. des Übergangs vom inneren zum äußeren Abschnitt des vorauslaufenden Verfestigungselementes unter Druck entlangbewegt wird und schließlich bei entsprechend hohem Druck an der Anschlagfläche zum Stillstand kommt. Der Träger bzw. Flansch, an dem der innere Abschnitt des Verfestigungselementes befestigt, vorzugsweise auswechselbar angeschraubt oder angenietet ist, kann sich bis zur im wesentlichen vollen Länge des inneren Abschnittes in radialer Richtung erstrecken, aber auch wesentlich kürzer als der innere Abschnitt sein, je nach den Federeigenschaften des Verfestigungselementes. Auch kann die ansonsten plane Stirnfläche, die tangential zum Umkreis ausgebildet ist, auch stufenförmig oder schräg ausgebildet sein, um einen den Erfordernissen entsprechenden Festanschlag zu erzielen.

Der innere Abschnitt des Befestigungselementes, der von dem zentralen Rohr radial nach außen verläuft, kann auch unmittelbar mit dem Rohrumfang befestigt sein, wobei das innere Ende des Innenabschnittes entweder in das Rohr eingesetzt oder so abgebogen ist, daß der abgebogene Teil teilkreisförmig gekrümmt auf dem Rohrumfang festgelegt und dort festgeschraubt, vernietet oder verschweißt ist.

In weiterer Ausgestaltung der Erfindung wird vorgeschlagen, die in Umfangsrichtung in einer gemeinsamen Ebene auf dem Rohr angeordneten Verfestigungselemente mit ihren Trägern in axialer Richtung zueinander leicht versetzt anzuordnen, so daß bei umlaufender Verformung die Abdrücke der einzelnen Verfestigungselemente im einen Fall eine im wesentlichen kontinuierliche gerade Linie ausbilden, in letzterem Fall jedoch nebeneinander angeordnete Linien bzw. Streifen, die in radialer Richtung versetzt sein können, derart, daß die Abdruckstreifen sich in Fahrtrichtung überlappen oder getrennte, voneinander beabstandete Streifen ausbilden.

Nachstehend wird die Erfindung in Verbindung mit der Zeichnung anhand von Ausführungsbeispielen erläutert. Es zeigt:
- Fig. 1: eine schematische Seitenansicht der erfindungsgemäßen Vorrichtung,
- Fig. 2: eine schematische Aufsicht auf die Vorrichtung nach Fig. 1 in geringfügig abgeänderter Ausführung,
- Fig. 3: die schematische Darstellung einer Ausführungsform der Erfindung in seitlicher Ansicht,
- Fig. 4: eine andere Ausführungsform der Erfindung,
- Fig. 5: eine weitere Ausführungsform der Erfindung, ebenfalls in schematischer Seitenansicht,
- Fig. 6: eine vierte Ausführungsform der Erfindung in schematischer Seitenansicht,
- Fig. 7: eine schematische Darstellung der Anordnung von abwechselnden Stempelvorrichtungen und Nivellierelementen in Aufsicht,
- Fig. 8: eine Seitenansicht auf eine Stempelvorrichtung und ein Nivellierelement, und
- Fig. 9: eine andere Ausgestaltung der Erfindung mit Nivellierelement und Auslaufvorrichtung .

An einem schleppergezogenen Maschinenrahmen 1, der in Fahrtrichtung 2 bewegt wird, sind Scharhalter 3 mit Scharen 4 in Querrichtung der Maschine zueinander versetzt so angeordnet, daß die Schare 4 den Boden an den Stellen, an denen die Särillen gezogen werden, aufreißen. Der Maschinenrahmen 1 nimmt einen sich über die gesamte Maschinenbreite erstreckenden Rechen 5 (bzw. Kamm), der gelenkig bei 6 und unter Vorspannung einer Feder 7 gelagert ist, auf. Die Rechenvorrichtung 5 weist einen Querträger 8 auf, der am Maschinenrahmen vertikal und/oder horizontal verstellbar angeordnet ist und an dem eine Vielzahl von Rechenzinken 9 befestigt sind, deren Anzahl der Anzahl der erforderlichen Särillen entspricht. Die einzelnen Rechenzinken 9 sind im Winkel nach hinten und unten angestellte Zinken, deren unteres Ende 10 nach hinten und oben geknickt oder gebogen, z.B. säbelförmig ausgebildet ist. Dieses untere Ende 10 wirkt auf die von den Scharen 4 aufgerissene Rille so ein, daß eine Särille mit Saatbeet 11 gezogen wird. Mit den Rechenzinken 9 sind Saatgut-Zuführschläuche 12 verbunden, die Saatgut aus dem Saatgut-Vorratsbehälter 13 an den Saatgut-Auslauf 14 abgeben. Vom Saatgut-Auslauf 14 fällt das Saatgut auf das Saatbeet 11, das durch die Rechenzinken 9 von organischem, losem Material, Erdreichbrocken oder dergl. befreit wird.

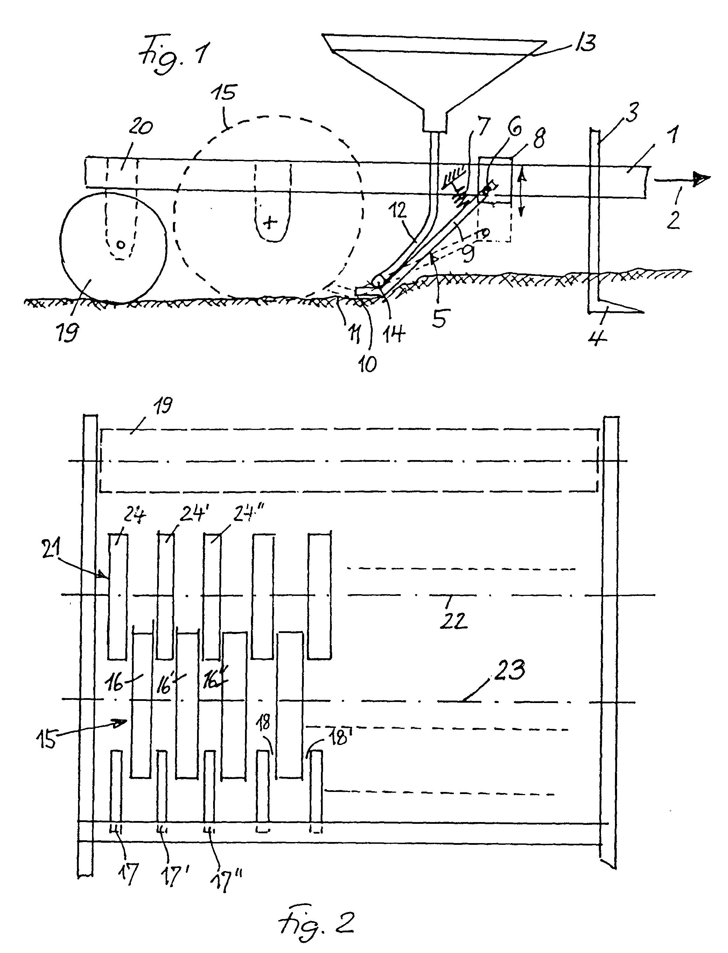

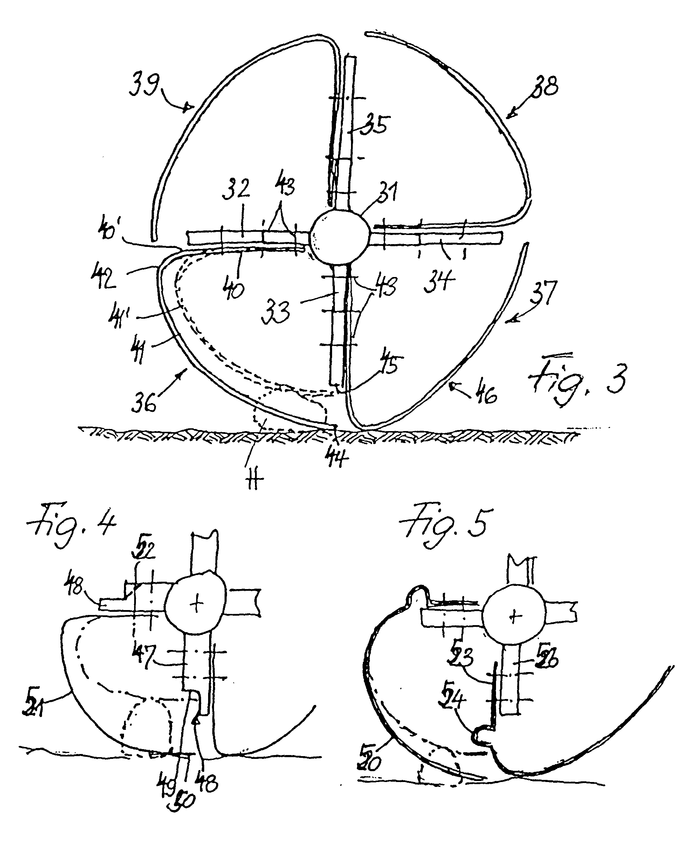

In Fahrtrichtung hinter der Rechenvorrichtung 5 ist eine Räumwalze 15, z.B. in Form eines Stempelpackers, einer Prismenwalze, einer Anordnung aus parallelen Reifen oder dergl. vorgesehen. Die Räumelemente dieser Vorrichtung, z.B. Stempelwerkzeuge, greifen in die Zwischenräume zwischen jeweils zwei nebeneinander angeordneten Rechenzinken 9 ein, so daß sicher vermieden wird, daß sich Erdreich, organisches Material oder dergl. zwischen den Rechenzinken festsetzt. Die Räumvorrichtung 15, die beispielsweise als Stempelpacker, Prismenwalze oder Reifenwalze auf dem Maschinenrahmen 1 befestigt ist, greift, wie in Fig. 2 dargestellt, mit ihren Räumelementen 16, 16' in die Lücke zwischen jeweils zwei benachbarten Rechenzinken 17, 17', 17", ... ein, so daß die Räumelemente 16 sich zwischen den Rechenzinken 17 ansammelndes Erdreich, Pflanzenbestandteile oder dergl. beseitigen und gleichzeitig auf das durch die Bildung der Särillen vorhandene aufgelockerte Erdreich an der Begrenzung 18, 18' des Saatgutbettes niedergedrückt wird. An die Räumvorrichtung 15 schließt eine walzenförmige Andrückvorrichtung 19 an, die über Träger 20 mit dem Maschinenrahmen 1 verbunden ist.

Anstelle einer einzigen Räumvorrichtung 15 können zwei Räumvorrichtungen 15 und 21 vorgesehen sein, deren Achsen 22 und 23 in Fahrtrichtung hintereinander angeordnet sind und deren Räumelemente 16, 16' und 24, 24', 24" auf Lücke zueinander angeordnet sind, so daß die einzelnen Elemente ineinandergreifen und damit ein Verstopfen wirksam verhindern. Die zweite Räumvorrichtung 21 kann die Funktion der Andrückvorrichtung 19 übernehmen, wenn die Räumelemente 24, 24',.. in Reihe mit den Rechenzinken 17, 17',.. angeordnet sind.

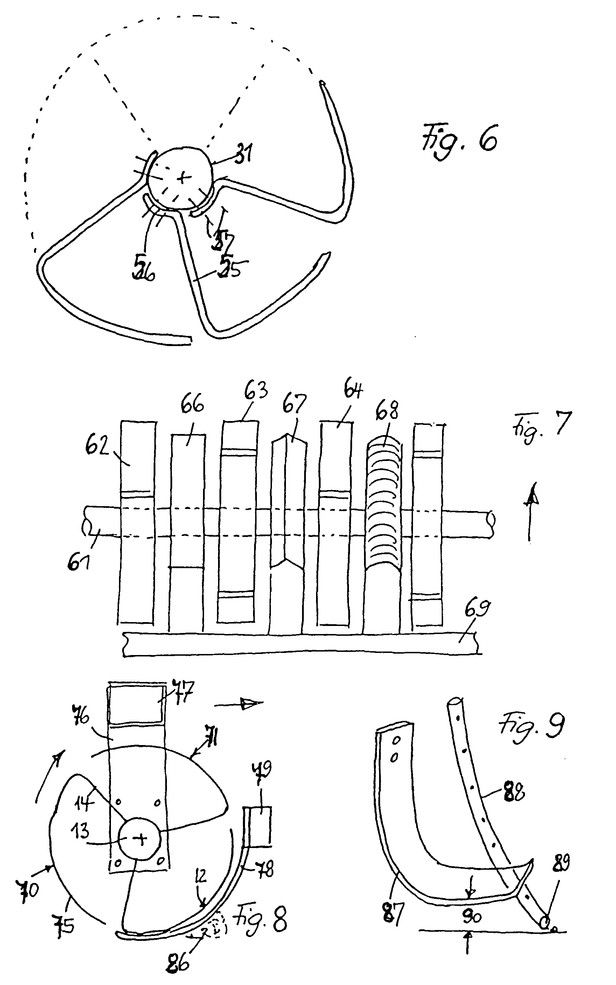

Auf einem zentralen Rohr 31 nach Fig. 3 sind in radialer Richtung vom Rohr nach außen verlaufende Träger bzw. Flansche 32, 33, 34, 35 vorgesehen, die mit dem Rohrumfang fest verbunden, z.B. verschweißt sind. Diese Träger weisen Verfestigungselemente 36, 37, 38, 39 auf, die jeweils aus einem inneren, radial nach außen verlaufenden Abschnitt 40 und einem äußeren, in Teilkreisform ausgebildeten Abschnitt 41 bestehen. Der innere Abschnitt 40 geht bei 42 in den äußeren Abschnitt 41 über. Der innere Abschnitt 40 ist mit Schraubverbindungen 43 am Träger bzw. Flansch 32 angeschraubt, angenietet oder dgl. Trifft der äußere Abschnitt 41 auf ein gestrichelt dargestelltes Hindernis H auf, wird der äußere Abschnitt 41, möglicherweise auch der äußere Teil des inneren Abschnittes 40, entsprechend ausgelenkt, wie gestrichelt mit 40', 41' angedeutet, so daß das freie Ende 44 des äußeren Abschnittes 41 auf die Stirnfläche 45 des vorauslaufendenTrägers bzw. Flansches 33 mit dem daran befestigten Verdichtungselement 46 auftrifft, der als Festanschlag wirkt und die Auslenkung der Federvorrichtung 40, 41 begrenzt.

Bei der Darstellung der Ausführungsform nach Fig. 4 ist ein Träger 47 (entsprechend dem Träger 32 nach Fig. 3) dargestellt, dessen Stirnfläche 48 stufenförmig ausgebildet ist, wobei die Anschlagfläche 49 zur Aufnahme des Endes 50 des äußeren Abschnittes 21 dient. Die Fläche 49 ist in Fig. 4 voll ausgezogen und tangential verlaufend dargestellt, und mit 52 (gestrichelt) in weiterer Ausgestaltung als Schräge geformt.

Bei der Ausführungsform nach Fig. 5 ist der Träger bzw. Halter 32 in der in Fig. 3 dargestellten Weise ausgebildet, während der innere Abschnitt 53 der Federanordnung einen Ansatz 54 aufweist, der als Festanschlag für das freie Ende 50 eines äußeren Abschnittes 51 der nachlaufenden Federanordnung dient.

Fig. 6 zeigt eine Ausführungsform, bei der der innere Abschnitt 55 eines Verfestigungselementes nicht, wie in den Figuren 3-5 gezeigt, an einem Träger bzw. Flansch befestigt, sondern mit einer der Umfangsform des Rohres 31 angepaßten Verlängerung 56 als einteiliges Federelement ausgebildet ist, wobei die Verlängerung 56 des inneren Abschnittes 55 bei 57 mit dem Rohr 31 verschraubt, vernietet oder in entsprechender Weise befestigt ist.

In Figur 7 ist schematisch auf einer durchgehenden rotierenden Welle 61 eine Folge von Stempelvorrichtungen 62, 63, 64, 65 angeordnet. Zwischen den Stempelvorrichtungen sind stationäre Nivellierelemente 66, 67, 68 dargestellt, die auf einem Teil des Maschinenrahmens 69 befestigt sind. Das Nivellierelement 66 ist dabei in Form eines Flacheisens, das Nivellierelement 67 in Form eines Dreiecks, und das Nivellierelement 68 in Form eines Teilrohres (gewölbt) angedeutet.

Wie in Figur 8 dargestellt, besteht eine Stempelvorrichtung 62 aus Stempelelementen 70, 71, 72, die auf einer rotierenden Welle 73 befestigt sind. Die einzelnen Stempelelemente setzen sich aus einem radialen Abschnitt 74 und einem teilkreisförmigen Abschnitt 75 zusammen. Die rotierende Welle 73 erstreckt sich, wie in Figur 7 die Welle 61, über die gesamte Maschinenbreite und ist an einem Träger 76 des Rahmens 77 gelagert. Das Nivellierelement 78 ist an einem Rahmenteil 79 befestigt und ist feststehend, in Bodennähe elastisch nachgiebig ausgebildet.

In Figur 9 ist ein Nivellierelement 87 , das mit einer Auslaßvorrichtung 88 für Körner oder Dünger in Form eines Rohres, Schlauches oder dgl. gekoppelt ist, und dessen Auslauf unterhalb der tiefsten Stelle des Nivellierelementes 87 liegt. Der Abstand 90 zwischen Nivellierelement 87 und Auslaufvorrichtung 88 ist vorzugsweise verstellbar ausgebildet. Desweiteren ist die Befestigung des Nivellierelementes 87 am Rahmenteil 79 höhenverstellbar ausgebildet (nicht dargestellt).

## Patentansprüche

1. Vorrichtung zum Vorbereiten des Bodens für das Säen und zum Ausbringen von Saatgut, mit rotierenden Räumwerkzeugen in Walzen- oder Reifenform, vorzugsweise Stempelwerkzeugen einer Stempelwalze, mit davon getrennt angeordneten Sävorrichtungen mit Saatgutausläufen und mit einer vorausarbeitenden Vorrichtung für die Bodenbearbeitung, insbesondere für das Aufreißen des Bodens zum Ausbilden der Saatrillen, **dadurch gekennzeichnet, dass** auf der horizontalen Achse der Stempelwalze zwischen jeweils zwei rotierenden Stempelelementen (62, 63, 64, 65) mit dem Rahmen befestigte Nivellierelemente (66, 67, 68) angeordnet sind, die im Staubereich gegenüber dem den Umkreis bildenden Abschnitt der Stempelelemente in Fahrtrichtung versetzt sind, und die die Stelle jeweils eines Stempelelementes einnehmen.

2. Vorrichtung nach Anspruch 1, **dadurch gekennzeichnet, dass** die Nivellierelemente (66, 67, 68) elastisch nachgiebig ausgebildet sind, aus Metall, Kunststoff oder ähnlichem, abriebfestem Material bestehen und selbst nachgiebig ausgebildet oder nachgiebig befestigt sind.

3. Vorrichtung nach Anspruch 1 oder 2, **dadurch gekennzeichnet, dass** die Nivellierelemente (66, 67, 68;) Träger bzw. Stützen für ein oder mehrere Auslaufvorrichtungen (88, 89) für Körner oder Dünger sind, und dass die Auslaufvorrichtungen an den Nivellierelementen höhenverstellbar zur Anpassung an unterschiedliche Ablagetiefen ausgebildet sind.

4. Vorrichtung nach einem der Ansprüche 1 - 3, **dadurch gekennzeichnet, dass** an sich bekannte Rechenzinken (9) mit den Saatgutausläufen (14) gekoppelt sind, dass die Rechenzinken (5) und die Stempelelemente der Stempelwalze (15) auf Lücke miteinander angeordnet sind, und dass die Rechenzinken in Fahrtrichtung vor den Stempelelementen angeordnet sind.

5. Vorrichtung nach einem der Ansprüche 1 - 4, **dadurch gekennzeichnet, dass** zusätzlich zu einer einzigen Räumvorrichtung (15) in Form einer Stempelwalze eine zweite Räumvorrichtung (21) vorgesehen ist, dass die Räumelemente (16, 24) der ersten und der zweiten Räumvorrichtung auf Lücke zueinander angeordnet sind, und dass die zweite Räumvorrichtung (21) als Andrückvorrichtung (19) arbeitet.

## Claims

1. Device for preparing the soil for sowing and for discharging seed, comprising rotating scraping tools of cylindrical or annular shape, preferably punching tools of a punching cylinder, and seed discharging devices arranged separate therefrom having seed exits, and preceding devices for tilling the soil, especially opening the soil for forming seed grooves, **characterised in that** the horizontal axis of the punching cylinder between two rotating punching elements (62, 63, 64, 65) each is provided with elements (66, 67, 68), which within the cumulation area are staggered in the moving direction in view of that section of the stacking elements forming the circumference, and which are substituting a stacking element each.

2. Device according to claim 1, **characterised in that** the levelling elements (66, 67, 68) are formed as elastic, resilient members, are made from metal, plastic or the like wear-resistant material, and are made resilient in themselves or are resiliently fastened.

3. Device according to claim 1 or 2, **characterised in that** said levelling elements (66, 67, 68) are provided as supports or carriers for one or several discharge means (88, 89) for seeds or fertilizers, and that said discharg means are connected adjustable in height with the levelling elements for adapting different depositing levels.

4. Device according to one of claims 1 - 3, **characterised in that** known per se rake spikes (9) are coupled with said seed discharge means (14), that said rake spikes (5) and the punching elements of the punching cylinder (15) are staggered in view of each other, and that the rake spikes are arranged in front of the stacking elements in the moving direction.

5. Device according to any one of claims 1 - 4, **characterised in that** in addition to a single scraping device (15) formed as a punching cylinder a second scraping device (21) is provided, that the scraping elements (16, 24) of said first and said second scraping device are staggered in view of each other, and that the second scraping device (21) operates as a pressing device (19).

## Revendications

1. Dispositif destiné à préparer le sol pour les semailles et à épandre les semences, avec outils de déblayage rotatifs en forme de rouleaux ou bandes, de préférence outils à poinçon d'un rouleau à poinçon, avec dispositifs de semaille distincts avec sorties de semences et dispositif à chasse avant pour le pré-traitement du sol, et notamment pour la scarification du sol en vue de former des stries de semences, **caractérisé en ce que** chaque élément de nivellement (66, 67, 68) fixé au bâti a été disposé sur l'axe horizontal du rouleau à poinçon, entre deux éléments de poinçon rotatifs (62, 63, 64, 65), les éléments de nivellement étant décalés dans la zone d'engorgement par rapport au segment des éléments à poinçon formant la circonférence, dans la direction de roulage, et qui prennent chacun la place d'un élément à poinçon.

2. Dispositif selon la revendication 1, **caractérisé en ce que** les éléments de nivellement (66, 67, 68) sont résilients, constitués de métal, de plastique ou d'un autre matériau similaire résistant au frottement et ont été représentés ou fixés de manière flexible.

3. Dispositif selon la revendication 1 ou 2, **caractérisé en ce que** les éléments de nivellement (66, 67, 68) sont des supports ou soutiens pour un ou plusieurs dispositif(s) de sortie (88, 89) des céréales ou engrais, et **en ce que** les dispositifs de sortie peuvent être réglés en hauteur en fonction des éléments de nivellement, afin de les adapter à des profondeurs de dépôt différentes.

4. Dispositif selon une des revendications 1 - 3, **caractérisé en ce que** des dents de peigne connues en tant que telles (9) ont été raccordées aux sorties de semences (14), **en ce que** les dents de peigne (5) et les éléments à poinçon du rouleau à poinçon (15) ont été disposés à une certaine distance les uns par rapport aux autres, et **en ce que** les dents de peigne sont disposées dans la direction de roulage, devant les éléments à poinçon.

5. Dispositif selon une des revendications 1 - 4, **caractérisé en ce qu'**un deuxième dispositif de déblayage (21) a été prévu en sus d'un dispositif de déblayage unique (15) en forme de rouleau à poinçon, **en ce que** les éléments de déblayage (16, 24) du premier et du deuxième dispositifs de déblayage ont été disposés à une certaine distance les uns des autres, et **en ce que** le deuxième dispositif de déblayage (21) fonctionne comme un dispositif de pression.
